# EUROPÄISCHE PATENTSCHRIFT

(11) **EP 0 917 632 B1**
(45) Veröffentlichungstag und Bekanntmachung des Hinweises auf die Patenterteilung: **11.12.2002**
(21) Anmeldenummer: 97938870.9
(22) Anmeldetag: 04.08.1997
(51) Int. Cl.: F16N 27/00, F04B 53/10

(54) **VORRICHTUNG ZUM DOSIERTEN FÖRDERN EINER MINIMALMENGE EINER FLÜSSIGKEIT**
DEVICE FOR SUPPLYING AN APPORTIONED MINIMUM AMOUNT OF FLUID
DISPOSITIF D'AMENEE PAR DOSE D'UNE QUANTITE MINIMALE DE LIQUIDE

(30) Priorität: 04.08.1996 DE 29613444 U; 25.02.1997 DE 19707400; 25.02.1997 DE 29703317 U
(43) Veröffentlichungstag der Anmeldung: 26.05.1999
(73) Patentinhaber: J. Lorch Ges. & Co. KG., Gesellschaft für Maschinen und Einrichtungen, 71111 Waldenbuch (DE)
(72) Erfinder: KÜTHER, Ludwig, D-71111 Waldenbuch (DE)
(74) Vertreter: Dreiss, Fuhlendorf, Steimle & Becker
(86) Internationale Anmeldenummer: EP9704231
(87) Internationale Veröffentlichungsnummer: WO98006971

(56) Entgegenhaltungen:
- DE-A- 2 651 133
- DE-A- 4 319 098
- US-A- 1 994 173

## Beschreibung

Die Erfindung betrifft eine Vorrichtung zum dosierten impulsgesteuerten Fördern einer Minimalmenge einer Flüssigkeit, insbesondere von Öl zum Schmieren pneumatisch betätigter Systeme, mit einem Verdrängerraum, einem darin verschieblichen stösselartigen Verdrängerorgan und einem in dem Verdrängerraum mündenden Zuführkanal, mit einem Rückschlagventil zum strömungsmäßigen Abtrennen eines unter Förderdruck stehenden Abschnitts des Verdrängerraums gegen den Zuführkanal, und mit einem von dem Verdrängerraum wegführenden und in einer Abtropföffnung mündenden Abführkanal, wobei der Abführkanal gegen den Verdrängerraum durch ein in Schließrichtung und entgegen der Förderrichtung vorgespanntes Ventil dichtend verschließbar ist und wobei das stösselartige Verdrängerorgan durch eine impulsgesteuerte Betätigungseinrichtung in dem Verdrängerraum bewegbar ist, wodurch Flüssigkeit von dem Zuführkanal zu dem Abführkanal gefördert wird, und wobei ein Ventilkörper des Ventils als von dem Verdrängerorgan separates und unter Federspannung stehendes Bauteil ausgebildet und bei Hineinbewegen des Verdrängerorgans in den Verdrängerraum ohne von diesem berührt zu werden von seinem Ventilsitz abhebbar ist, so daß währenddessen ein dem verdrängten Volumen entsprechendes Flüssigkeitsvolumen an dem Ventilkörper vorbei in den Abführkanal gefördert wird und nach Erreichen einer Endstellung des Verdrängerorgans der Ventilkörper wieder gegen seinen Ventilsitz gelegt wird.

Aus der DE 43 19 098 A1 ist eine Ölpumpe für die Versorgung eines Verbrennungsmotors mit Schmiermittel bekannt, deren grundsätzlicher Aufbau dem vorstehend geschilderten entspricht. Bei derartigen Ölpumpen werden jedoch sehr viel größere Flüssigkeitsmengen gefördert.

Aus der DE 195 32 566 C1 und aus der EP 0 246 178 A2 sind Vorrichtungen zum dosierten Fördern einer Minimalmenge von Öl zum Schmieren pneumatisch betätigter Systeme bekannt. Diese Vorrichtungen weisen jedoch den Nachteil auf, dass beim Bewegen des Verdrängerorgans eine Strömungsverbindung oder Druckkommunikation zwischen dem mit Förderdruck beaufschlagten Zuführkanal und dem zur Abtropföffnung führenden Abführkanal besteht. Die geförderte Ölmenge ist daher von den momentanen Druckverhältnissen abhängig, und die Reproduzierbarkeit bzw. Einstellbarkeit der erwünschten Fördermenge ist nicht zufriedenstellend.

Die Erfindung geht daher aus von einer Vorrichtung mit den Merkmalen des Oberbegriffs des Anspruchs 1, bei der während des Ansaughubs des Verdrängerorgans der Abführkanal gegen den Verdrängerraum durch das entgegen der Förderrichtung vorgespannte Ventil dichtend verschlossen ist. Während des Förderhubs des Verdrängerorgans wird das den Verdrängerraum gegen den Abführkanal abtrennende Ventil geöffnet, ohne dass das Verdrängerorgan den Ventilkörper des Ventils berührt.

Zwischen den Förderimpulsen, wenn also das Verdrängerorgan sich in seiner Endstellung befindet, ist das vorstehend erwähnte Ventil dann geschlossen, wenn der auf der Abtropfseite, also in dem Strömungskanal, herrschende Druck zuzüglich des Federdrucks des Ventils größer ist als der auf der Zuführseite herrschende Vordruck. Infolge von Druckschwankungen im Strömungskanal kann es aber dazu kommen, dass der in Schließrichtung vorgespannte Ventilkörper von seinem Ventilsitz abgehoben wird, so dass während dieser Zeit die unerwünschte Druckkommunikation zwischen der Zuführseite und der Abführseite besteht und undefinierte Zustände zur Folge hat. Der vorliegenden Erfindung liegt nun die Aufgabe zugrunde, eine Vorrichtung der eingangs erwähnten Art dahingehend zu verbessern, dass die vorstehend genannten Nachteile nicht auftreten und die zu fördernde Minimalmenge genau definiert vorgegeben bzw. eingestellt werden kann.

Diese Aufgabe wird bei einer Vorrichtung der genannten Art erfindungsgemäß dadurch gelöst, dass das Verdrängerorgan in seiner Endstellung an einen axialen Anschlag innerhalb des Verdrängerraums dichtend anlegbar ist.

Durch die dichtende Anlage des Verdrängerorgans in der Endstellung wird eine sichere Abdichtung des Verdrängerraums bzw. der Zuführseite gegen den Abführkanal auch dann gewährleistet, wenn im Strömungskanal, also auf der Abführseite, Druckschwankungen auftreten. Im Übrigen lässt sich durch Anlage der Stirnseite des Verdrängerorgans gegen den axialen Anschlag das je Förderhub geförderte Minimalvolumen noch genauer einstellen, als dies bislang der Fall war.

Um zu verhindern, dass mit dem Anschlagen oder Aufsetzen des Verdrängerorgans an oder auf dem axialen Anschlag störende Geräusche entstehen, umfasst der axiale Anschlag oder eine Stirnseite des Verdrängerorgans ein nicht metallisches, geräuschdämpfendes Material. In jedem Fall wird sichergestellt, dass das Verdrängerorgan und der axiale Anschlag derart komplementär zueinander ausgebildet sind, dass in dieser Endstellung des Verdrängerorgans in Anlage an dem Anschlag eine sichere Abdichtung des Verdrängerraums gegen den Abführkanal gewährleistet ist.

Bei einer bevorzugten Ausführungsform der Erfindung ist der axiale Anschlag von einem Element gebildet, welches auch den Ventilsitz des den Verdrängerraum gegen den Abführkanal verschließenden Ventils bildet. Die Herstellungs- bzw. Montagekosten werden also durch die erfindungsgemäße Maßnahme nicht erhöht.

Der axiale Anschlag könnte von einem ansich beliebigen Dichtsitz im weitesten Sinne gebildet sein. Es erweist sich als besonders vorteilhaft und herstellungstechnisch einfach, wenn der axiale Anschlag von einem O-Ring aus einem elastomeren Dichtmaterial hergestellt ist. Der O-Ring kann gegen eine umlaufende Stufe einer abgesetzten Öffnung, welche den Verdrängerraum begrenzt, anliegen.

Wenn der O-Ring zugleich radial nach innen über die durchmesserkleinere Begrenzung der abgesetzten Öffnung vorsteht, so kann der Ventilkörper des zuvor erwähnten den Verdrängerraum gegen den Abführkanal verschließenden Ventils gegen den O-Ring als Dichtsitz angelegt werden.

Nach einem weiteren Erfindungsgedanken wird der O-Ring durch eine den Verdrängerraum begrenzende Laufbuchse für das Verdrängerorgan gegen die umlaufende Stufe gedrückt und so in einer Montageposition gehalten.

Es wird desweiteren vorgeschlagen, die Hubhöhe des Verdrängerorgans gegenüber dem axialen Anschlag innerhalb des Verdrängerraums einstellbar auszuführen, was in vorteilhafter Weise durch ein in axialer Richtung verstellbares Anschlagmittel bei der impulsgesteuerten Betätigungseinrichtung erreicht werden kann.

Wenn das Rückschlagventil, welches einen unter Förderdruck stehenden Abschnitt des Verdrängerraums gegen die Zuführseite hin abdichtet, verhältnismäßig weit vom Verdrängerraum entfernt vorgesehen ist, so wie dies bei bekannten Vorrichtungen der gattungsgemäßen Art der Fall ist, so wirken sich Lufteinschlüsse in dem Volumen zwischen dem Rückschlagventil und dem Verdrängerraum sehr negativ aus und erschweren die Bedienbarkeit bzw. Benutzbarkeit der Fördervorrichtung. Es erweist sich insoweit als vorteilhaft, wenn nach einem weiteren Erfindungsgedanken, dem ansich eigenständige Bedeutung zukommt, das Rückschlagventil innerhalb des Verdrängerraums vorgesehen ist. Hierdurch wird das Volumen zwischen dem Rückschlagventil und dem Verdrängerraum quasi auf Null reduziert. Die Bedien- bzw. Benutzbarkeit der erfindungsgemäßen Vorrichtung ist einfacher, da sich keine störenden Lufteinschlüsse mehr zwischen Verdrängerraum und Rückschlagventil ausbilden können, die sich komprimieren lassen und so eine Inbetriebnahme der Vorrichtung erschweren, da sie erst aufwendig entlüftet werden muss.

Es wird desweiteren vorgeschlagen, das Rückschlagventil als Dichtung zwischen dem Verdrängerorgan und einer Wandung des Verdrängerraums vorzusehen.

In ganz besonders vorteilhafter Weise umfasst das Rückschlagventil ein gegen einen Dichtsitz anlegbares bzw. von einem Dichtsitz abhebbares schwimmend um das Verdrängerorgan herum vorgesehenes Dichtelement. Das Dichtelement ist bezüglich des Verdrängerorgans in axialer Richtung verschieblich und weist ein radiales Spiel zu dem Verdrängerorgan auf. Es liegt radial außen dichtend und in axialer Richtung verschieblich gegen die Wandung des Verdrängerraums an. Das Dichtelement soll beim Ansaughub des Verdrängerorgans einen Strömungsquerschnitt freigeben und beim Förderhub verschließen.

In Weiterbildung des Erfindungsgedankens ist ein Dichtsitz des Rückschlagventils von dem Verdrängerorgan selbst gebildet. Es weist in vorteilhafter Weise eine Umfangsnut auf, in der das Dichtelement schwimmend aufgenommen ist, wobei die zuführseitige Nutflanke der Umfangsnut den Dichtsitz für das Dichtelement bildet. Beim Ansaughub des Verdrängerorgans wird das Dichtelement von dem Dichtsitz abgehoben, so dass zu fördernde Flüssigkeit zwischen der Wandung des Verdrängerraums und dem Verdrängerorgan vorbei von der Zuführseite in die Umfangsnut und von dort über eine Ausnehmung im Verdrängersorgan zur Förderseite des Verdrängerorgans gelangen kann.

Nach einer ganz besonders bevorzugten Weiterbildung dieses Erfindungsgedankens ist der Abstand der die Umfangsnut begrenzenden Nutflanken nur geringfügig größer als die Dicke des Dichtelements in dieser Richtung, so dass das Rückschlagventil im wesentlichen totraumfrei ist. Beim Übergang vom Ansaughub zum Förderhub des Verdrängerorgans im Zuge der nur etwa 300 bis 500 ms dauernden Betätigung des Verdrängerorgans wird schlagartig von der Betriebsstellung Ansaugen zur Betriebsstellung Fördern bzw. Verdrängen umgeschaltet, indem das Dichtelement des Rückschlagventils sofort in dichtende Anlage an die zuführseitige Nutflanke der Umfangsnut gelegt wird.

Um Reibungskräfte bei der Mitbewegung bzw. Relativbewegung des Dichtelements gegenüber der Wandung des Verdrängerraums so gering wie möglich zu halten, wird vorgeschlagen, in den Verdrängerraum eine Laufbuchse für das Verdrängerorgan einzusetzen, gegen die der O-Ring dichtend gleitet und die vorzugsweise aus PTFE besteht oder eine PTFE-Beschichtung aufweist. Diese Laufbuchse kann - wie eingangs bereits erwähnt - das als Anschlag wirkende Element mit ihrer Stirnseite in einer Montageposition halten.

Weitere Merkmale, Vorteile und Einzelheiten der Erfindung ergeben sich aus den beigefügten Ansprüchen und aus der zeichnerischen Darstellung und nachfolgenden Beschreibung zweier vorteilhafter Ausführungsformen der Erfindung. In der Zeichnung zeigt:

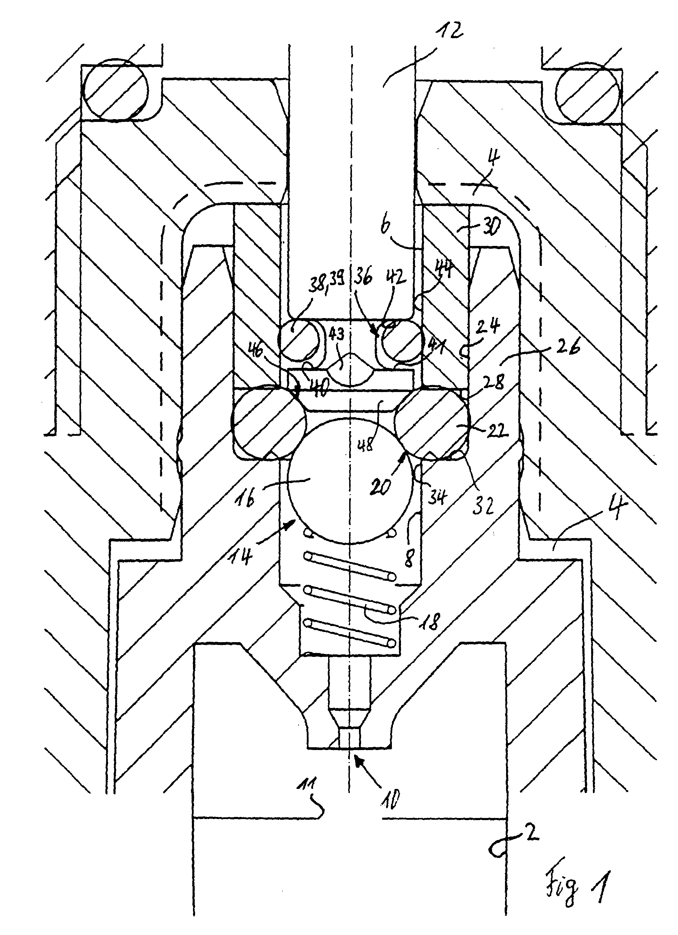

- Figur 1: eine ausschnittsweise Ansicht einer erfindungsgemäßen Vorrichtung zum dosierten impulsgesteuerten Fördern einer Minimalmenge einer Flüssigkeit; und
- Figur 2: eine ausschnittsweise Darstellung einer weiteren Ausführungsform der Vorrichtung.

Die Figuren zeigen ausschnittsweise eine Fördervorrichtung zum impulsgesteuerten Fördern einer Minimalmenge von Öl, beispielsweise in der Größenordnung von 15 mm³/Hub, zum Schmieren pneumatisch betätigter Systeme, wobei das Öl in Form kleiner Tröpfchen an in einem Druckluftkanal 2 vorbeiströmende Druckluft abgegeben wird. Das zu fördernde bzw. genau zuzumessende Öl wird von einem nicht dargestellten Reservoir über einen Zuführkanal 4 einem Verdrängerraum 6 zugeführt. Von dem Verdrängerraum 6 führt ein Abführkanal 8 weg und mündet in einer Abtropföffnung 10. Von der Abtropföffnung 10 abtropfende Flüssigkeit gelangt über eine Öffnung 11 in den Druckluftkanal 2 und wird von der dort strömenden Arbeitsluft mitgerissen und zerstäubt.

Zum Fördern bzw. Verdrängen von Flüssigkeit aus dem Verdrängerraum 6 ist ein stangen- oder stösselförmiges Verdrängerorgan 12 vorgesehen, das sich von oben in den Verdrängerraum 6 hineinerstreckt und in diesen hinein- bzw. aus diesem herausbewegbar ist.

Hierfür ist eine in der Figur nicht dargestellte impulsgesteuerte Betätigungseinrichtung vorgesehen, die elektromagnetisch, elektromotorisch oder in sonstiger Weise das Verdrängerorgan bewegen kann. Der Verdrängerraum 6 ist durch ein insgesamt mit dem Bezugszeichen 14 bezeichnetes Ventil gegenüber dem Abführkanal 8 verschließbar. Das Ventil 14 umfasst einen kugelförmigen Ventilkörper 16, der durch eine Feder 18 entgegen der Förderrichtung und in Schließrichtung vorgespannt gegen einen Ventilsitz 20 anlegbar bzw. von diesem abhebbar ist. Der Ventilsitz 20 ist von einem kreisringförmigen Dichtelement 22 gebildet, welches in eine abgestufte Gehäusebohrung 24 eines domförmigen Vorrichtungsgehäuseteils 26 eingesetzt ist.

Das kreisringförmige Dichtelement 22 ist durch die Stirnseite 28 einer in die abgesetzte Bohrung 24 eingesetzten Laufbuchse 30 gegen eine umlaufende Stufe 32 der abgesetzten Bohrung 24 gedrückt. Das kreisringförmige Dichtelement 22 steht in radialer Richtung nach innen über die Wandung 34 des durchmesserkleineren Abschnitts der Bohrung 24, welche zugleich den Abführkanal 8 bildet, vor, so dass der Ventilkörper 16 daran dichtend anlegbar ist.

Um den Verdrängerraum 6 während des Ansaughubs des Verdrängerorgans 12 mit dem Zuführkanal 4 zu verbinden und während des Förderhubs von dem Zuführkanal 4 zu trennen ist ein insgesamt mit dem Bezugszeichen 36 bezeichnetes Rückschlagventil vorgesehen.

Das Rückschlagventil 36 ist zwischem dem Verdrängerorgan 12 und der Laufbuchse 30 ausgebildet und umfasst ein Dichtelement 38 in Form eines O-Rings 39 aus einem elastomeren Dichtmaterial. Der O-Ring 39 ist schwimmend in einer Umfangsnut 40 des Verdrängerorgans 12 vorgesehen. Der O-Ring 39 ist also in axialer Richtung verschieblich und an die eine oder andere Flanke 41, 42 der Umfangsnut 40 anlegbar.

Beim Ansaughub des Verdrängerorgans 12 wird der Strömungsquerschnitt durch eine von radial innen nach außen gehende Ausnehmung 43 in der Nutflanke 41 freigegeben, und es kann Flüssigkeit über den Zuführkanal 4, die Umfangsnut 40 und die Ausnehmung 43 in den Verdrängerraum 6 nachströmen. Das Dichtelement 38 wird dabei von der Nutflanke 41 in axialer Richtung mitgenommen.

Wenn der Strömungsquerschnitt beim Förderhub des Verdrängerorgans 12 verschlossen wird, so liegt der O-Ring 39 an die in Förderrichtung hintere Nutflanke 42 sowie an die Wandung 44 der Laufbuchse 30 dichtend an, und zwar durch die Wirkung des beim Förderhub des Verdrängerorgans 12 entstehenden Förderdrucks.

Der Förderhub des Verdrängerorgans 12 ist durch einen axialen Anschlag 46 in Förderrichtung begrenzt. Der axiale Anschlag 46 ist von dem kreisringförmigen Dichtelement 22 des Ventils 14 zwischen Verdrängerraum 6 und Abführkanal 8 gebildet. Durch das kreisringförmige Dichtelement 22 wird das Anschlagen des freien Endes 48 des Verdrängerorgans 12 gedämpft und es treten keine störenden Geräusche auf. In dieser Endstellung liegt das Verdrängerorgan dichtend gegen den Anschlag 46 an und stellt sicher, dass der Verdrängerraum auch dann sicher gegen die Abführseite abgedichtet ist, wenn im Zuführkanal 4 aufgrund plötzlicher Druckschwankungen der Druck derart absinkt, dass der Ventilkörper 16 unter dem Vordruck der Zuführseite von seinem Ventilsitz 20 abgehoben würde.

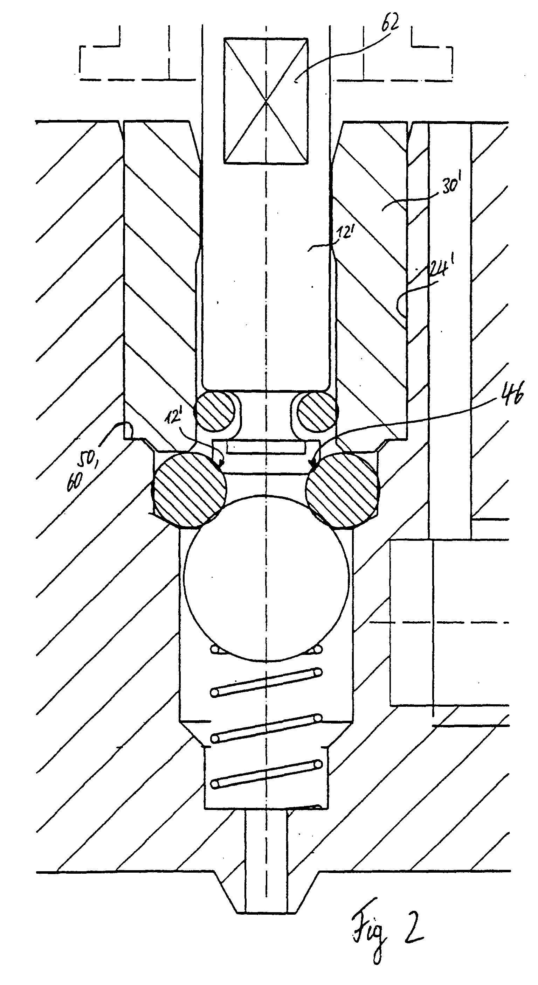

Figur 2 zeigt eine weitere Ausführungsform der Fördervorrichtung, wobei die Bohrung 24' eine weitere Abstufung 50 aufweist, die einen definierten Montageanschlag 60 für die Laufbuchse 30' aufweist. Es ist des Weiteren eine elektromagnetische Betätigungseinrichtung 62 angedeutet, deren Hubhöhe gegenüber dem Anschlag 46 des Verdrängerorgans 12' und somit gegenüber dem Montageanschlag 60 einstellbar ist.

## Patentansprüche

1. Vorrichtung zum dosierten impulsgesteuerten Fördern einer Minimalmenge einer Flüssigkeit, insbesondere von Öl zum Schmieren pneumatisch betätigter Systeme, mit einem Verdrängerraum (6), einem darin verschieblichen stösselartigen Verdrängerorgan (12) und einem in dem Verdrängerraum (6) mündenden Zuführkanal (4), mit einem Rückschlagventil zum strömungsmäßigen Abtrennen eines unter Förderdruck stehenden Abschnitts des Verdrängerraums (6) gegen den Zuführkanal (4), und mit einem von dem Verdrängerraum (6) wegführenden und in einer Abtropföffnung (10) mündenden Abführkanal (8), wobei der Abführkanal (8) gegen den Verdrängerraum (6) durch ein in Schließrichtung und entgegen der Förderrichtung vorgespanntes Ventil (14) dichtend verschließbar ist und wobei das stösselartige Verdrängerorgan (12) durch eine impulsgesteuerte Betätigungseinrichtung (62) in dem Verdrängerraum (6) bewegbar ist, wodurch Flüssigkeit von dem Zuführkanal (4) zu dem Abführkanal (8) gefördert wird, und wobei ein Ventilkörper (16) des Ventils (14) als von dem Verdrängerorgan (12) separates und unter Federspannung stehendes Bauteil ausgebildet und bei Hineinbewegen des Verdrängerorgans (12) in den Verdrängerraum (6) ohne von diesem berührt zu werden von seinem Ventilsitz (20) abhebbar ist, so daß währenddessen ein dem verdrängten Volumen entsprechendes Flüssigkeitsvolumen an dem Ventilkörper (16) vorbei in den Abführkanal (8) gefördert wird und nach Erreichen einer Endstellung des Verdrängerorgans (12) der Ventilkörper (16) wieder gegen seinen Ventilsitz (20) gelegt wird, **dadurch gekennzeichnet, dass** das Verdrängerorgan (12) in seiner Endstellung an einen axialen Anschlag (46) innerhalb des Verdrängerraums (6) dichtend anlegbar ist.

2. Vorrichtung nach Anspruch 1, **dadurch gekennzeichnet, dass** der axiale Anschlag (46) oder eine Stirnseite des Verdrängerorgans (12) ein geräuschdämpfendes Material umfassen.

3. Vorrichtung nach Anspruch 1 oder 2, **dadurch gekennzeichnet, dass** der axiale Anschlag (46) von einem Element (22) gebildet ist, welches auch den Ventilsitz (20) des den Verdrängerraum (6) gegen den Abführkanal (8) verschließenden Ventils (14) bildet.

4. Vorrichtung nach einem der vorherstehenden Ansprüche, **dadurch gekennzeichnet, dass** der axiale Anschlag (46) von einem O-Ring (22) aus einem elastomeren Dichtmaterial gebildet ist.

5. Vorrichtung nach Anspruch 4, **dadurch gekennzeichnet, dass** der O-Ring (22) gegen eine umlaufende Stufe (32) in einer gestuften Öffnung (24) anliegt.

6. Vorrichtung nach Anspruch 5, **dadurch gekennzeichnet, dass** der O-Ring (22) durch eine den Verdrängerraum (6) begrenzende Laufbuchse (30) für das Verdrängerorgan (12) gegen die umlaufende Stufe (32) gedrückt ist.

7. Vorrichtung nach einem oder mehreren der vorstehenden Ansprüche, **dadurch gekennzeichnet, dass** das dem axialen Anschlag (46) zugewandte vordere Ende des Verdrängerorgans (12) kegelstumpfförmig ausgebildet ist.

8. Vorrichtung nach einem oder mehreren der vorstehenden Ansprüche, **dadurch gekennzeichnet, dass** die Hubhöhe des Verdrängerorgans (12) gegenüber dem axialen Anschlag (46) bei der impulsgesteuerten Betätigungseinrichtung (62) einstellbar ist.

9. Vorrichtung nach Anspruch 8, **dadurch gekennzeichnet, dass** die Hubhöhe mechanisch über ein axiales Anschlagmittel bei der Betätigungseinrichtung (62) einstellbar ist.

10. Vorrichtung nach einem oder mehreren der vorstehenden Ansprüche, **dadurch gekennzeichnet, dass** das Rückschlagventil (36) innerhalb des Verdrängerraums (6) vorgesehen ist.

11. Vorrichtung nach Anspruch 10, **dadurch gekennzeichnet, dass** das Rückschlagventil (36) als Dichtung zwischen dem Verdrängerorgan (12) und einer Wandung (44) des Verdrängerraums (6) vorgesehen ist.

12. Vorrichtung nach Anspruch 10 oder 11, **dadurch gekennzeichnet, dass** das Rückschlagventil (36) ein gegen einen Dichtsitz (42) anlegbares bzw. von dem Dichtsitz (42) abhebbares schwimmend um das Verdrängerorgan (12) herum vorgesehenes Dichtelement (38) umfasst.

13. Vorrichtung nach Anspruch 12, **dadurch gekennzeichnet, dass** der Dichtsitz (42) von dem Verdrängerorgan (12) gebildet ist.

14. Vorrichtung nach den Ansprüchen 12 und 13, **dadurch gekennzeichnet, dass** das Verdrängerorgan (12) eine Umfangsnut (40) aufweist, in der das Dichtelement (38) schwimmend aufgenommen ist, und daß die zuführseitige Nutflanke der Umfangsnut (40) den Dichtsitz (42) bildet.

15. Vorrichtung nach Anspruch 14, **dadurch gekennzeichnet, dass** der Abstand der die Umfangsnut (40) begrenzenden Nutflanken nur geringfügig größer ist als die Dicke des Dichtelements in dieser Richtung (so dass das Rückschlagventil (36) im wesentlichen totraumfrei ist).

16. Vorrichtung nach einem der vorstehenden Ansprüche 10-15, **dadurch gekennzeichnet, dass** das Dichtelement (38) des Rückschlagventils (36) ein O-Ring (39) aus elastomerem Dichtmaterial ist.

17. Vorrichtung nach Anspruch 16, **dadurch gekennzeichnet, dass** der O-Ring (39) einen Innendurchmesser der Öffnung von 1-2 mm aufweist.

18. Vorrichtung nach Anspruch 16 oder 17, **dadurch gekennzeichnet, dass** der O-Ring (39) eine Dicke von 0,8-1,3 mm Durchmesser aufweist.

19. Vorrichtung nach einem der Ansprüche 10-18, **dadurch gekennzeichnet, dass** in den Verdrängerraum (6) eine Laufbuchse (30) für das Verdrängerorgan (12) eingesetzt ist, gegen die das Dichtelement (38) dichtend und verschieblich anliegt.

20. Vorrichtung nach Anspruch 19, **dadurch gekennzeichnet, dass** die Laufbuchse (30) aus PTFE besteht.

## Claims

1. A device for supplying an apportioned minimum amount of fluid, especially oil for lubricating pneumatically actuated systems, having a positive-displacement chamber (6), a tappet-like positive-displacement member (12) displaceable therein, and a feeding channel (4) discharging into the positive-displacement chamber (6), having a check valve for the hydraulic disconnection of a portion of the positive-displacement chamber (6) that is at pumping pressure from the feeding channel (4), and having a discharge channel (8), leading away from the positive-displacement chamber (6) and discharging into a drop opening (10), wherein the discharge channel (8) can be closed off sealingly from the positive-displacement chamber (6) by a valve (14) prestressed in the closing direction and contrary to the pump direction, and wherein the tappet-like positive-displacement member (12) is movable by a pulse-controlled actuating device (62) in the positive-displacement chamber (6), as a result of which fluid is pumped from the feeding channel (4) to the discharge channel (8), and wherein a valve body (16) of the valve (14) is embodied as a structural component which is separate from the positive-displacement member (12) and is subject to spring tension, and which can be lifted from its valve seat (20) without being touched by the positive-displacement member (12) as the positive-displacement member (12) being pushed into the positive-displacement chamber (6), so that during this process a fluid volume equivalent to the positively displaced volume is pumped past the valve body (16) into the discharge channel (8), and once a terminal position of the positive-displacement member (12) is reached the valve body (16) is again pressed against its valve seat (20), **characterized in that** the positive-displacement member (12), in its terminal position, can be pressed sealingly against an axial stop (46) inside the positive-displacement chamber (6).

2. The device of claim 1, **characterized in that** the axial stop (46), or a face of the positive-displacement member (12), includes a noise-damping material.

3. The device of claim 1 or 2, **characterized in that** the axial stop (46) is formed by an element (22) which also forms the valve seat (20) of the valve (14) that closes off the positive-displacement chamber (6) from the discharge channel (8).

4. The device of one of the foregoing claims, **characterized in that** the axial stop (46) is formed by an O-ring (22) of an elastomeric sealing material.

5. The device of claim 4, **characterized in that** the O-ring (22) presses against an encompassing shoulder (32) in a graduated opening (24).

6. The device of claim 5, **characterized in that** the O-ring (22) is pressed against the encompassing shoulder (32) by a bush (30) for the positive-displacement member (12), the bush defining the positive-displacement chamber (6).

7. The device of one or more of the foregoing claims, **characterized in that** the front end of the positive-displacement member (12), oriented toward the axial stop (46), is embodied frustoconically.

8. The device of one or more of the foregoing claims, **characterized in that** the stroke height of the positive-displacement member (12) relative to the axial stop (46) is settable in the pulse-controlled actuating device (62).

9. The device of claim 8, **characterized in that** the stroke height is settable mechanically via an axial stop means in the actuating device (62).

10. The device of one or more of the foregoing claims, **characterized in that** the check valve (36) is provided inside the positive-displacement chamber (6).

11. The device of claim 10, **characterized in that** the check valve (36) is provided as a seal between the positive-displacement member (12) and one wall (44) of the positive-displacement chamber (6).

12. The device of claim 10 or 11, **characterized in that** the check valve (36) includes a sealing element (38) that can be placed against a sealing seat (42) or lifted up from the sealing seat (42) and is provided in floating fashion around the positive-displacement member (12).

13. The device of claim 12, **characterized in that** the sealing seat (42) is formed by the positive-displacement member (12).

14. The device of claims 12 and 13, **characterized in that** the positive-displacement member (12) has a circumferential groove (40) in which the sealing element (38) is received in floating fashion, and that the side of the circumferential groove (40) toward the feeding side forms the sealing seat (42).

15. The device of claim 14, **characterized in that** the spacing of the groove sides that define the circumferential groove (40) is only slightly greater than the thickness of the sealing element in this direction (so that the check valve (36)) is essentially free of idle volume).

16. The device of one of the foregoing claims 10 to 15, **characterized in that** the sealing element (38) of the check valve (36) is an O-ring (39) of elastomeric sealing material.

17. The device of claim 16, **characterized in that** the O-ring (39) has an inside diameter of its opening of 1 to 2 mm.

18. The device of claim 16 or 17, **characterized in that** the O-ring (39) has a thickness of 0.8 to 1.3 mm in diameter.

19. The device of one of claims 10 to 18, **characterized in that** a bush (30) for the positive-displacement member (12) is inserted into the positive-displacement chamber (6), and the sealing element (38) rests sealingly and displaceably against it.

20. The device of claim 19, **characterized in that** the bush (30) is made of PTFE.

## Revendications

1. Dispositif d'amenée par dose, à commande par impulsions, d'une quantité minimale de liquide, en particulier d'huile pour la lubrification de systèmes à actionnement pneumatiques, avec une chambre de refoulement (6), un organe de refoulement (12) de type poussoir, mobile en translation dans ladite chambre de refoulement et un canal d'amenée (4) débouchant dans la chambre de refoulement (6), avec un clapet de non-retour pour interrompre la communication hydraulique entre une portion de la chambre de refoulement (6) qui se trouve sous la pression de refoulement et le canal d'amenée (4), et avec un canal d'évacuation (8) partant de la chambre de refoulement (6) et débouchant dans une ouverture de dégouttement (10), le canal d'évacuation (8) pouvant être isolé de manière étanche de la chambre de refoulement (6) par une soupape (14) précontrainte dans la direction de fermeture et dans le sens inverse de l'écoulement, l'organe de refoulement (12) de type poussoir pouvant être déplacé dans la chambre de refoulement (6) par un dispositif d'actionnement (62) commandé par impulsions, ce qui a pour effet de faire circuler le liquide du canal d'amenée (4) jusqu'au canal d'évacuation (8), et un corps de soupape (16) de la soupape (14) étant conçu sous la forme d'un composant distinct de l'organe de refoulement (12) et précontraint par ressort et pouvant être soulevé de son siège de soupape (20) lors de l'introduction de l'organe de refoulement (12) dans la chambre de refoulement (6) sans être touché par ledit organe, de sorte que, pendant ce temps, un volume de liquide correspondant au volume refoulé est transféré le long du corps de soupape (16) dans le canal d'évacuation (8), et après que l'organe de refoulement (12) a atteint une position extrême, le corps de soupape (16) est replaqué contre son siège de soupape (20), **caractérisé en ce que**, dans sa position extrême, l'organe de refoulement (12) peut être plaqué de manière étanche contre une butée axiale (46) à l'intérieur de la chambre de refoulement (6).

2. Dispositif selon la revendication 1, **caractérisé en ce que** la butée axiale (46) ou une face frontale de l'organe de refoulement (12) comprend un matériau insonorisant.

3. Dispositif selon la revendication 1 ou 2, **caractérisé en ce que** la butée axiale (46) est formée d'un élément (22) qui forme également le siège (20) de la soupape (14) qui isole la chambre de refoulement (6) du canal d'évacuation (8).

4. Dispositif selon l'une des revendications précédentes, **caractérisé en ce que** la butée axiale (46) est formée par un joint torique (22) en un matériau élastomère d'étanchéité.

5. Dispositif selon la revendication 4, **caractérisé en ce que** le joint torique (22) est en appui contre un gradin périphérique (32) ménagé à l'intérieur d'une ouverture étagée (24).

6. Dispositif selon la revendication 5, **caractérisé en ce que** le joint torique (22) est plaqué contre le gradin périphérique (32) par le coussinet (30) de l'organe de refoulement (12), lequel coussinet délimite la chambre de refoulement (6).

7. Dispositif selon l'une ou plusieurs des revendications précédentes, **caractérisé en ce que** l'extrémité avant de l'organe de refoulement (12) orientée face à la butée axiale (46) affecte une forme tronconique.

8. Dispositif selon l'une ou plusieurs des revendications précédentes, **caractérisé en ce que** la course de l'organe de refoulement (12) par rapport à la butée axiale (46) est réglable au niveau du dispositif d'actionnement commandé par impulsions (62).

9. Dispositif selon la revendication 8, **caractérisé en ce que** la course est réglable mécaniquement au moyen d'un élément de butée axial au niveau du dispositif d'actionnement commandé par impulsions (62).

10. Dispositif selon l'une ou plusieurs des revendications précédentes, **caractérisé en ce que** le clapet de non-retour (36) est prévu à l'intérieur de la chambre de refoulement (6).

11. Dispositif selon la revendication 10 **caractérisé en ce que** le clapet de non-retour (36) est prévu sous la forme d'un élément d'étanchéité agencé entre l'organe de refoulement (12) et une paroi (44) de la chambre de refoulement (6).

12. Dispositif selon la revendication 10 ou 11, **caractérisé en ce que** le clapet de non-retour (36) comprend un élément d'étanchéité (38) agencé flottant autour de l'organe de refoulement (12) et apte à venir en appui contre un siège d'étanchéité (42) et à être soulevé dudit siège d'étanchéité (42).

13. Dispositif selon la revendication 12, **caractérisé en ce que** le siège d'étanchéité (42) est formé par l'organe de refoulement (12).

14. Dispositif selon les revendications 12 et 13, **caractérisé en ce que** l'organe de refoulement (12) présente une gorge (40) recevant de manière flottante l'élément d'étanchéité (38) et **en ce que** le flanc de la gorge (40) côté alimentation forme le siège d'étanchéité (42).

15. Dispositif selon la revendication 14, **caractérisé en ce que** la distance entre les flancs délimitant la gorge (40) n'est que légèrement supérieure à l'épaisseur de l'élément d'étanchéité dans cette direction (de sorte que le clapet de non-retour (36) est sensiblement exempt d'espace mort).

16. Dispositif selon l'une des revendications précédentes 10 à 15, **caractérisé en ce que** l'élément d'étanchéité (38) du clapet de non-retour (36) est un joint torique (39) en matériau élastomère d'étanchéité.

17. Dispositif selon la revendication 16, **caractérisé en ce que** le joint torique (39) présente un diamètre interne d'ouverture compris entre 1 et 2 mm.

18. Dispositif selon la revendication 16 ou 17, **caractérisé en ce que** le joint torique (39) présente une épaisseur de 0,8 à 1,3 mm de diamètre.

19. Dispositif selon l'une des revendications 10 à 18, **caractérisé en ce qu'**est agencé dans la chambre de refoulement (6) un coussinet (30) destiné à recevoir l'organe de refoulement (12) et contre lequel l'élément d'étanchéité (38) appuie de manière étanche et avec capacité de translation.

20. Dispositif selon la revendication 19, **caractérisé en ce que** le coussinet (30) est en PTFE.
